# EUROPEAN PATENT APPLICATION

(11) **EP 0 923 020 A2**
(43) Date of publication of application: **16.06.1999**
(21) Application number: 98310184.1
(22) Date of filing: 11.12.1998
(51) Int. Cl.: G06F 3/02

(54) **Ergonomic computer control device**

(30) Priority: 12.12.1997 US 989657
(71) Applicant: Ergonomic Technologies Corporation, Oyster Bay, New York 11771 (US)
(72) Inventor: Mitchell, Dennis, Oyster Bay, New York 11771 (US)
(74) Representative: Read, Matthew Charles

(57) **Abstract**

The invention discloses an ergonomic computer control device connected to a computer keyboard and includes a thumb-operated cursor control unit for positioning the cursor and for selectively engaging different applications on a computer screen. The cursor control unit is elevated above a space bar on the keyboard via a support member connected to the keyboard. The device can either be permanently mounted to the keyboard or connected to the keyboard after manufacturing. An electrical feed line connects the cursor control unit to the keyboard. The line transmits signals to the computer so that when a user manipulates the cursor control unit, an electrical signal will be sent through the line into the to the computer to move the cursor on the screen. In other embodiments, two cursor control devices can be used, to allow for both left- and right-hand users and to have cooperating functions on each of the two devices.

## Description

### BACKGROUND OF THE INVENTION

### 1. Field of the Invention

The present invention relates to a thumb-operated cursor control device positioned above a computer keyboard. More particularly, the device is designed to elevate a computer control device over a space bar on a keyboard so that it is operable by a user's thumbs and fits under the natural curve of the fingers on a keyboard.

### 2. The Prior Art

Control devices are widely used in computers to control the position of the cursor on a computer screen. For example, *Engle et al*., *U.S. Patent No. 5,541,622*, discloses a miniature isometric joystick designed for receiving manual input from a computer user with the joystick located between keys on a keyboard. The joystick includes a joystick tip which connects to a joystick shaft by a preloaded spring. A computer user can then move the joystick to control the position of the cursor on the screen and then press down on the joystick tip down onto the preloaded spring to highlight the position on the screen or to activate programs that have been selected.

United States Patent No. 5,563,629 to Caprara discloses a device for controlling the positioning of a cursor displayed on the screen of an interactive system. The device includes a manual actuation element which is similar to a button and reacts when pressed by a computer user. The button can be pressed on any point of its surface, and when a user presses this button, he can control the position of the cursor on the computer screen by tilting the button in the direction where the user wants the cursor to move.

United States Patent No. 5,510,811 to Tobey et al. discloses an apparatus and method for controlling cursor movement. This apparatus allows a user to control the cursor position on a computer controlled display using simple controls. This apparatus may be connected directly to the computer or used remotely, connecting to the computer by radio frequency or infrared signals.

United States Patent No. 5,579,033 to Rutledge discloses a pointing device for retrofitting into the keyboard of an existing computer system. More particularly, this pointing device fits into the keyboard of an existing computer system and includes an analog input and a digital input physically and electrically connected to a data processing unit by flexible bands. The units and flexible bands are adhesively secured to a keyboard. The analog input is placed between two keys of the keyboard and the digital input units is placed at the edge of the keypad area, preferably below the space bar. In addition, the data processing unit can be configured to fit in a recess at the rear of the keyboard.

United States Patent No. 5,164,712 to Niitsuma discloses an XY input device. This XY input device is for moving a cursor on a screen in a desired direction. The device is located on the computer keyboard in front of the space bar. Another devices is shown in United States Patent No. 5,126,723 to Long et al., which discloses a keyboard mounted cursor position controller. This device includes a tray positioned on a keyboard before the space bar. The tray which is elongated along a first axis has right and left closed ends. This tray is mounted for translational movement along its first axis. A hand-operable roller is rotatably mounted in the tray and moveable therewith.

United States Patent No. 5,021,771 to Lachman discloses a computer control device consisting of two cursor positioning spheres and command keys. This device is positioned on a computer keyboard before the space bar. While this device may allow the user to position a cursor on a computer screen with his thumbs, it differs from the present invention because it is not elevated above the computer keyboard.

*United States Patent No. 5,339,097 to Grant* discloses a computer keyboard that includes a first slanting keyboard surface and a second slanting keyboard surface. The first and second keyboard surfaces are joined a peak central edge forming a V-shape which slopes downwardly toward a user and laterally away from the user. The keyboard has a cursor control unit in the front surface of the keyboard below the space bar and is used for controlling the movement of a cursor which is operated by the thumb of the user in the direction transverse to the direction of the operation of the keys. The space bar may also be operated in the transverse direction or at a selected angle.

All of these devices allow a user to position the cursor on a computer screen with their fingers. However, unlike the present invention, none of these patents disclose a cursor control device that is elevated above a computer keyboard and fits under the natural curve of the hand and fingers. This feature allows the user to use the cursor control device while simultaneously typing and has many ergonomic advantages as well.

Ergonomic positioning of the cursor control device is essential to preserving the user's comfort and health, especially in those professions that involve extended periods of computer use. One way to improve the ergonomics of a cursor control device is to make the device entirely thumb-operated. A thumb-operated device has many advantages. First, it allows the other fingers of the hands to remain on the keyboard in their normal typing position. Second, the amount of movement required in an thumb-operated device is significantly less than with an externally mounted joystick or trackball. Minimizing the movements required to utilize the cursor control device reduces the muscle activity associated with its use. Since the thumb is the strongest of all of the digits of the hand, it is easily operable and does not required different positioning depending on the handedness of the user.

The health benefits of a thumb-operated cursor control are many. The small motions to utilize the device include moving the thumb in several different ways, including abduction/adduction (towards and away from the palm of the hand), opposition/reposition (at the carpometacarpal joint) and flexion/extension. There is only one tendon that travels through the carpal tunnel canal, the "flexor pollicis longus", which is responsible for thumb flexion. However, the other muscle that aids the thumb in flexion is the flexor pollicis brevis. Its tendon does not travel through the carpal tunnel canal.

Therefore, using the thumbs as an input initiator reduces the tendon activity in the carpal tunnel canal. Excessive tendon activity can increase the likelihood of musculoskeletal related disorders, including tendinitis, tenosynovitis and carpal tunnel syndrome, to name a few. Therefore, this style of cursor control device reduces the exposure to risk factors for ergonomic related injuries and illnesses to the hands and wrist.

The three joints of the thumb are the carpometacarpal, metacarpophalangeal and the interphalangeal. Moving the cursor control device according to the present invention utilizes only the carpometacarpal and the metacarpophalangeal joints. Clicking the device can utilize all three joints. The only tendon connected to these joints that moves through the carpal tunnel canal is the flexor pollicis longus tendons that moves the interphalangeal joint.

Thus, a thumb-operated cursor control device has the advantage that the majority of tendons that facilitate the thumb motions do not run through the carpal tunnel canal. Irritations of the tendons and tendon sheaths in the carpal tunnel can cause swelling and put pressure on the median nerve, which can lead to carpal tunnel syndrome. Most prior art cursor control devices rely on motions of the hand and wrist and fingers, all of which stress the tendons in the carpal tunnel canal.

### SUMMARY OF THE INVENTION

It is therefore an object of the present invention to provide an ergonomic control device that allows a computer user to alternate typing on a keyboard and using a computer control device without removing their hands from the keyboard.

It is another object of the invention to provide an ergonomic control device that allows a user to use his thumbs to control a cursor on a computer screen and reduce the risk of ergonomic injuries to the hands and wrist.

It is yet another object of the invention is to provide an ergonomic control device that is simple in design, inexpensive to manufacture and easy to install.

These and other objects of the invention are accomplished by a computer control device, which includes a thumb-operated cursor control unit for positioning a cursor and selectively engaging applications on a computer screen. In addition, there is provided a support member connecting the cursor control unit to the computer keyboard. Alternatively, the cursor control unit can be permanently mounted to its own key on the keyboard if it is to be attached during manufacturing of the keyboard.

In an after-market application, the support member allows the cursor control unit to be positioned above the keyboard. The support member consists of a base plate connected to a keyboard and a support arm for supporting a cursor control unit over a keyboard.

An electrical feed line extends from the cursor control unit to the keyboard and connects the cursor control unit to the computer. The line transmits signals to the computer so that when a user manipulates the cursor control unit, an electronic signal will be sent through the line into the keyboard and then into the computer to move the cursor on the screen. In an after-market embodiment, the device plugs into the mouse port on the computer. Ideally, the plug is flow-through, so that other devices could also be connected to the same port.

In another embodiment of the invention, the support arm can be in the form of an L-shaped member or a two-part support member having a substantially vertical arm and a substantially horizontal arm. The support member is designed to elevate the cursor control unit above the space bar on a computer keyboard, thereby allowing the user to control the position of the cursor on the screen with his thumbs without removing his hands from the keyboard. For use with a laptop, the L-shaped member can be folded down and then pop up as the laptop cover is raised.

The cursor control unit can take the form of a joystick having a joystick button or a rocking button. Both the joystick and the rocking button are attached to the top end of the support member and extend from the support member along a longitudinal axis on the computer keyboard towards the middle of the space bar.

Alternatively, the cursor control unit can be in the form of a trackball or other pointing device on one side of the space bar and a single or multi-button control on the other side to facilitate cursor control as well as clicking and dragging. This two-element control device further reduces the musculoskeletal effort as the functionality is spread over two thumbs.

The cursor control device must fit under the natural curvature of the hand and ensure that the device can be moved without interfering with the space bar. Thus, precise dimensions of the cursor control unit are necessary. The cursor control unit must have a length of at least 0.5 in. and a width of less than half the width of the smallest operator, or generally no wider than 1.24 in., so as to not interfere with natural hand placement and movement.

The height of the device above the space bar should allow the center of the stick to be centered on the pad of the thumb as it rests on the space bar. Thus, an initial placement position could be estimated at 50% to 75% of the width of the thumb of the smallest operator, or .33 in to 0.5 in above the space bar. In a preferred embodiment, the height of the device could be adjusted to accommodate thumbs of different sizes.

The device should be positioned so that it is most easily reachable by the thumbs. The device is preferably positioned offset relative to the "J" or "F" key, depending on the handedness of the user. The device should be positioned so that the user does not break the plane of the "J" or "F" key during use. Most preferably, the end of the device should be offset 0.5 in or less from an imaginary line coming back from the left side of the "J" key or the right side of the "F" key.

The tip of the cursor control device should be between .25 in and 0.5 in wide and should be made out of a compressible material to reduce mechanical stress as well as reduce the pressure exerted on the skin.

As stated above, the device can be either built in to the keyboard or peripherally mounted thereon. In a peripheral mounting, the device is anchored to the keyboard either by the weight of the keyboard or the geometry of the device. In this arrangement, the device will have to be adjustable in height as well as in forward reach, due to the different sizes and configurations of the keyboards.

If the device is to be built in to the keyboard, it can be mounted on its own key. The space bar can be shortened and the device can be placed on either or both sides of the shortened keyboard. The space bar can be as little as 1.5 in. in length and still accommodate the thumbs and spacing activity. The device could also be configured to poke through the existing space bar.

### BRIEF DESCRIPTION OF THE DRAWINGS

Other objects and features of the present invention will become apparent from the following detailed description considered in connection with the accompanying drawings, which disclose the embodiments of the invention. It should be understood, however, that the drawings are designed for the purpose of illustration only and not as a definition of the limits of the invention.

In the drawings, wherein similar reference characters denote similar elements throughout the several views:
FIG. 1 shows a top view of an after-market adaption of the ergonomic control device mounted on a keyboard;
FIG. 2 shows a side view of the ergonomic computer control device according to FIG. 1;
FIG. 3 shows a second embodiment of the invention where there are two ergonomic computer control device positioned over the keyboard;
FIG. 4 shows another embodiment of the invention in which one of the control devices is a track ball and the other device is a three button unit having click and drag options;
FIG. 5 shows a block diagram of the ergonomic computer control device;
FIG. 6 shows the cursor positioning device as a joystick;
FIG. 7 shows the cursor positioning device as a control button;
FIG. 8 shows the control device in an embodiment permanently mounted to a computer keyboard; and
FIG. 9 shows a side view of the control device according to FIG. 8.

### DETAILED DESCRIPTION OF PREFERRED EMBODIMENTS

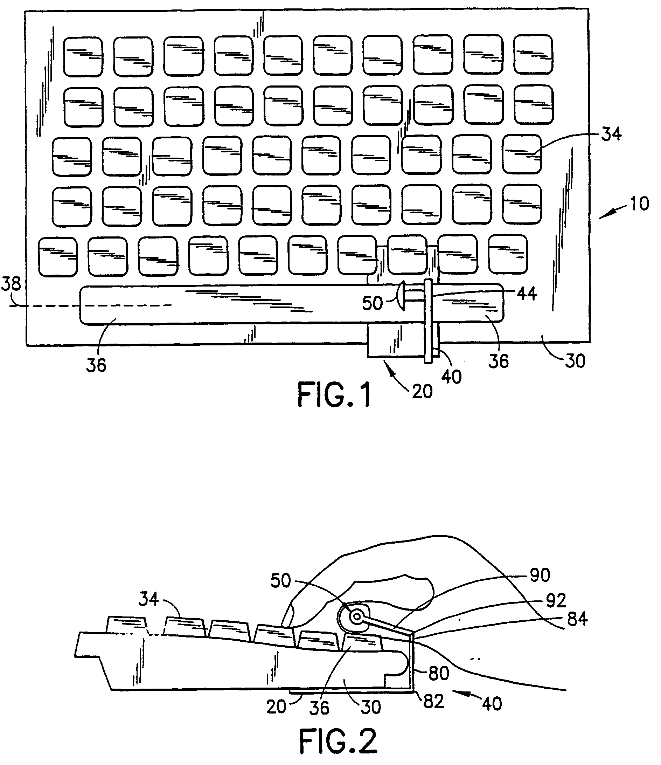

Turning now in detail to the drawings, FIGS. 1 and 2 show an after-market version of the ergonomic computer control device 10 of the invention, having a base plate 20. Base plate 20 is attached to and extends out from keyboard 30. Keyboard 30 includes keys 34 and space bar 36, which has a longitudinal axis 38. Extending up from base plate 20 is a support member 40 comprising a substantially vertical bar member 80 having a bottom end 82 and a top end 84. Bottom end 82 connects to the top of base plate 20. Top end 84 connects to a substantially horizontal bar member 90, having a first end 92 and a second end 94. Connected to second end 94 is cursor control unit 50. Cursor control unit 50 sends signals through an electric feed line 46 housed within support member 40, into keyboard 30. The signals then move into a computer causing a cursor to move across a computer screen.

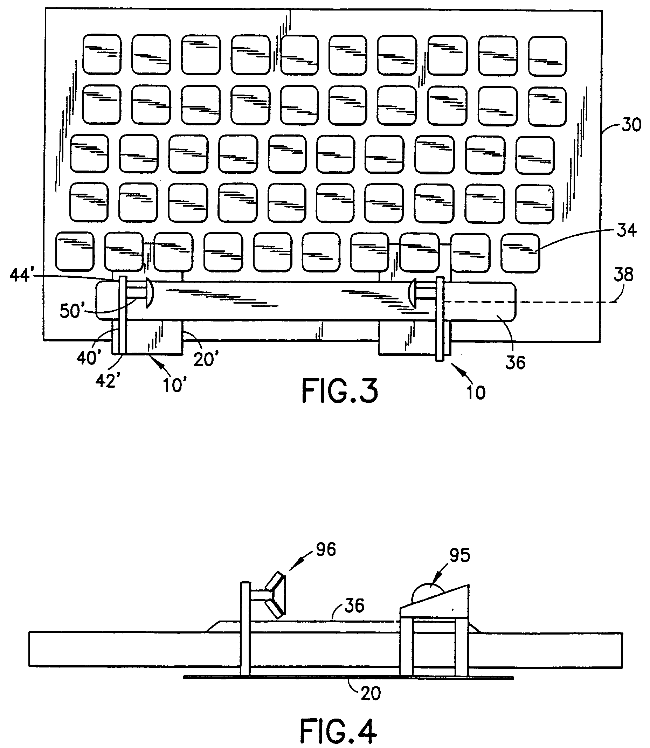

FIG. 3 shows a top view of keyboard 30 with two ergonomic cursor control units attached therein. Second ergonomic computer control device 10' includes a baseplate 20'. Support member 40' is attached to the top of baseplate 20' at bottom end 42'. At top end 44' is mounted cursor control unit 50'. In this case, second cursor control unit 50' is directed toward the center of space bar 36 along its longitudinal axis 38. Disposed inside both support member 40 and horizontal and vertical bar members 80 and 90 is an electric feed line 46 that connects cursor control unit 50 to keyboard 30.

FIG. 4 shows an alternative embodiment of the invention, in which there are two cursor control units mounted above the space bar 36. One unit is a trackball 95, for directing the position of the cursor on the computer screen, and the other unit is a three-button mouse control 96 that provides for clicking and dragging of selected items when used in conjunction with trackball 95. Trackball 95 and three button mouse control 96 are operated simultaneously by the user's opposing thumbs. The user never has to remove his fingers from the keyboard in order to operate the cursor control units. Both trackball 95 and control 96 are mounted on base plate 20 and extend above space bar 36.

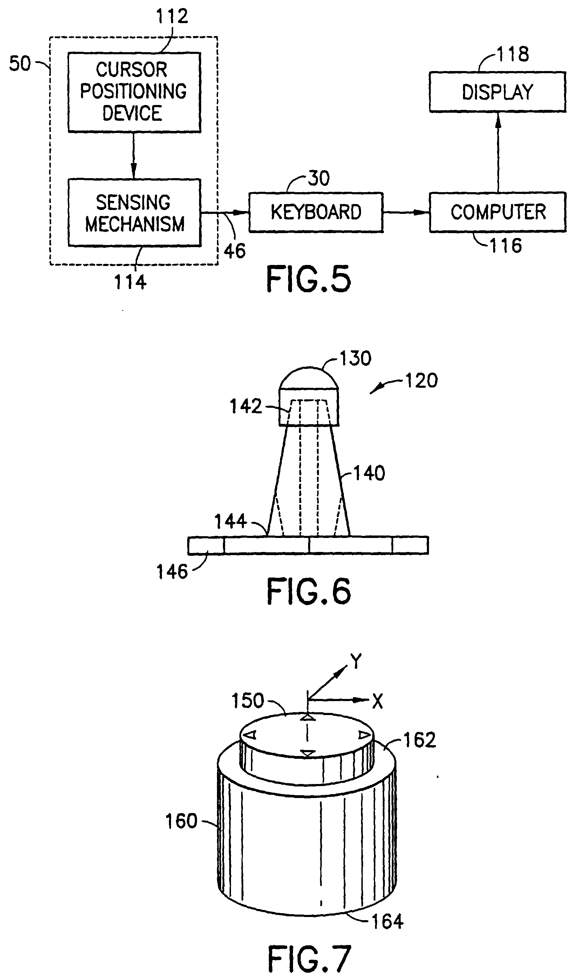

FIG. 5 shows a block diagram of the ergonomic computer control device relay system that is known in the art and found for example in U.S. Patent No. 5,021,771 to Lachman, which is disclosed above and incorporated herein by reference. This system is linked by line 46 for carrying external signals from a user on a cursor control unit 50 to the computer. Cursor control unit 50 comprises cursor positioning device 112 connected to sensor unit 114. For example when an external force is applied to cursor positioning device 112, the force acts upon sensor unit 114 sending signals through line 46 into keyboard 30. The sensor unit can be comprised of force sensitive resistors that continuously changes their electrical resistance in response to changes in applied pressure from cursor positioning device 112. The signals from control unit 50 are fed into the computer to cause a cursor on the computer screen to move.

FIG. 6 shows an embodiment of cursor positioning device 112 that comprises a joystick 120. Joystick 120 is known in the art and shown in U.S. Patent No. 5,541,622 the disclosure of which is incorporated herein by reference. For example, joystick 120 comprises button 130 that rests on shaft 140 at the top end 142. At the opposite end is bottom end 144 of shaft 140. Bottom end 144 connects to base 146. Base 146 can attach to top end 44 of support member 40 or a second end 94 of horizontal bar member 90.

FIG. 7 discloses another embodiment of the cursor positioning device comprising a rocking button 150. Rocking button 150 is known in the art and shown in U.S. Patent No. 5,563,629, which is incorporated herein by reference. Rocking button 150 is housed within a shaft 160. Shaft 160 has a button end 162 for containing button 150 and a base end 154 attached to top end 44 of support member 40 or second end 94 of horizontal bar member 90. Shaft 160 also houses sensing unit 114 which sends signals down line 46.

By positioning the cursor control unit above the keyboard and over the space bar, a person using a keyboard can easily position a cursor on a computer screen by using their thumbs. This design is therefore an improvement over the prior art since it will allow a user to control the cursor on their computer screen without moving their hands away from their original position or off of the keyboard.

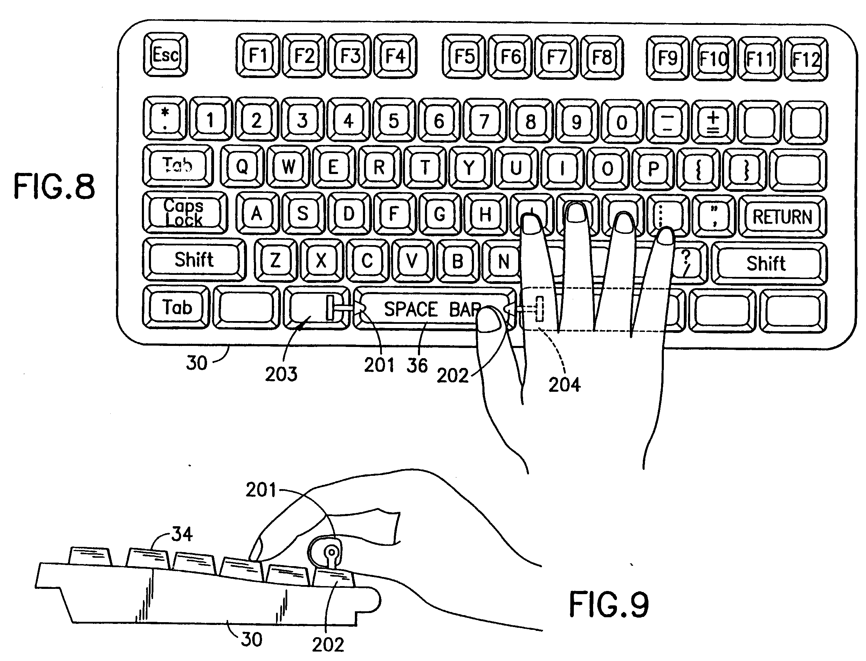

FIGS. 8 and 9 show yet another embodiment of the invention, in which the cursor positioning devices 201 and 202 are built in to the computer keyboard 30 during manufacturing. This arrangement is the most desirable because it allows the cursor positioning devices 201 and 202 to be securely mounted to their own keys 203 and 204 on either side of space bar 36. Space bar 36 is shortened to accommodate keys 203 and 204 within keyboard 30.

While several embodiments of the present invention have been shown and described, it is to be understood that many changes and modifications may be made thereunto without departing from the spirit and scope of the invention as defined in the appended claims.

## Claims

1. An ergonomic computer control device for moving a cursor on the screen of a computer in response to a force applied by the thumbs of the user, the device comprising:
a cursor control unit positioned for activation by a user's thumb;
a support member connected to said cursor control unit for elevating said cursor control unit above a surface; and
an electrical feed line located within said support member for electrically connecting said cursor control unit to said computer, so that when a user manipulates said cursor control unit, an electronic signal is sent through the line and into the computer so as to move the cursor on the computer screen.

2. The device as claimed in claim 1, further comprising a support surface for supporting said support member.

3. The device as claimed in claim 2, wherein said support surface comprises a base plate connected a computer keyboard, and wherein the support member comprises a support arm connected to said cursor control unit and extending from said base plate, over the space bar on said computer keyboard.

4. The device as claimed in claim 3, wherein said support arm comprises a substantially vertical arm having a first and second ends, said first end extending from said base plate above said computer keyboard, and a substantially horizontal arm having one end connected to said second end of said substantially vertical arm, said horizontal arm extending over said computer keyboard, wherein said cursor control unit is connected to said horizontal arm at its second end.

5. The device as claimed in claim 3, wherein said support arm is L-shaped.

6. The device as claimed in claim 1, additionally comprising a second cursor control unit positioned for activation by the user's other thumb, and a second support member for positioning said second cursor control unit over said keyboard.

7. The device as claimed in claim 1, wherein said cursor control unit comprises:
a cursor positioning device for positioning a cursor on the computer screen;
at least one button having an on and an off position on said positioning device for selectively activating different computer applications shown on said computer screen when said button is in said on position; and
a sensor unit designed to read signals from said cursor positioning device and said button, said sensor unit feeding signals through said line, into the keyboard, to the computer to control the cursor position on the computer screen.

8. The device as claimed in claim 7, wherein said cursor positioning device is a joystick having one end connected to said support member; and said button is a joystick button connected to the other end of said joystick.

9. The device as claimed in claim 7, wherein said cursor positioning device and said button comprise a single rocker button and a shaft, said shaft having a first end for housing said button and a second end connected to said support member, wherein when a user applies a force to one side of said rocker button, the cursor moves across the computer screen in a corresponding direction.

10. The device as claimed in claim 7, wherein said cursor positioning device is a trackball.

11. The device as claimed in claim 10, further comprising a three button mouse control positioned over said keyboard and operable by a user's thumbs, wherein said three button mouse control is adapted for selecting elements on a computer screen which can then be dragged to another location on said screen by said trackball.

12. The device as claimed in claim 7, wherein said sensor unit comprises a plurality of force sensitive resistors designed to detect an external force applied by a user's thumbs on the cursor positioning device and on said button.

13. The device as claimed in claim 7, wherein said cursor positioning device extends out from said support member along a longitudinal axis of a space bar on the computer keyboard.

14. The device according to claim 2, wherein the support surface is a section of a computer keyboard on one side of the space bar, and wherein the support member is permanently mounted to the keyboard.

15. The device according to claim 14, further comprising a second cursor control device connected to a second support member, said second support member being permanently mounted on the other side of the space bar to the computer keyboard.

16. A method of controlling movement of a cursor on the screen of a computer having a keyboard above which a cursor control unit is mounted, the method comprising operating the cursor control unit with the thumb of a user's hand whilst positioned to operate the keyboard.
